# NOUVEAU FASCICULE DE BREVET EUROPEEN

(11) **EP 2 429 879 B2**
(45) Date de publication et mention de la décision concernant l'opposition: **09.11.2016**
(45) Mention de la délivrance du brevet: 05.06.2013
(21) Numéro de dépôt: 10723667.1
(22) Date de dépôt: 13.04.2010
(51) Int. Cl.: B62D 25/20

(54) **DISPOSITIF DE RACCORDEMENT DE SOUBASSEMENTS, KIT D'ASSEMBLAGE ET PROCEDE D'HYBRIDATION DE SOUBASSEMENTS**
VORRICHTUNG ZUR VERBINDUNG VON UNTERBÖDEN, MONTAGESATZ UND VERFAHREN ZUR HYBRIDISIERUNG VON UNTERBÖDEN
DEVICE FOR CONNECTING UNDERBODIES, ASSEMBLY KIT AND METHOD FOR HYBRIDISATION OF UNDERBODIES

(30) Priorité: 15.05.2009 FR 0953231
(43) Date de publication de la demande: 21.03.2012
(73) Titulaire: Peugeot Citroën Automobiles SA, 78140 Vélizy-Villacoublay (FR)
(72) Inventeur: TALLET, Frédéric, F-70200 Moffans et Vacheresse (FR); BLAISE, Vincent, F-25260 Lougres (FR)
(74) Mandataire: Fosse, Danièle
(86) Numéro de dépôt international: PCT/FR2010/050713
(87) Numéro de publication internationale: WO 2010/130905

(56) Documents cités:
- DE-A1- 10 014 837
- DE-A1- 10 218 926
- US-A- 3 202 451
- US-A1- 2002 195 840
- US-A1- 2003 234 557

## Description

La présente invention se rapporte à un plancher pour véhicule automobile.

De façon classique, le plancher de l'habitacle d'un véhicule présente un tunnel de transmission, en saillie, qui permet de loger certains organes sous le véhicule, en particulier l'arbre de transmission et le tuyau d'échappement. Lors du montage du véhicule, le plancher est assemblé à partir de deux éléments de carrosserie, un soubassement arrière et un soubassement avant dans lequel est ménagé le tunnel de transmission. Les deux soubassements présentent au moins des parties de contour périphérique adaptées spécifiquement l'une à l'autre pour permettre un assemblage correct de ceux-ci. Ainsi, un soubassement avant choisi ne peut être assemblé qu'avec un certain nombre de soubassements arrière, c'est-à-dire ceux qui présentent une forme complémentaire adéquate. Par ailleurs, pour chaque type et chaque gamme de véhicule il est prévu des soubassements avant ou arrière différents.

La diversité des véhicules produits par un même constructeur d'automobile peut impliquer la production d'un grand nombre d'éléments de carrosserie différents, en particulier de soubassements avant et arrière différents. Cette diversité dans les éléments de carrosserie peut engendrer des coûts de production, de développement et de logistique importants. Or, les constructeurs d'automobiles ont le souci constant de chercher à diminuer les coûts des véhicules qu'ils produisent.

Le document US-A-2003/0234557 décrit un ensemble de plancher de véhicule présentant une section en tunnel s'étendant dans le sens du déplacement du véhicule. Pour simplifier la formation de divers planchers la section en tunnel est composée de plusieurs parties, à savoir une partie de tunnel avant et une partie de tunnel arrière reliées directement ou indirectement aux parties de planchers.

La présente invention a pour objet de remédier en tout ou partie aux différents inconvénients cités précédemment. Dans ce contexte technique, la présente invention a pour objet de réduire la diversité des éléments de carrosserie que doit produire un constructeur automobile afin d'assembler ses différents types ou gammes de véhicules.

A cet effet, la présente invention se rapporte à un plancher pour véhicule automobile comprenant un soubassement avant, un soubassement arrière et un dispositif de raccordement du soubassement arrière avec le soubassement avant, le dispositif de raccordement d'un soubassement arrière avec un soubassement avant pour véhicule automobile, comprenant un carter de carrosserie comportant une première zone de raccordement et une seconde zone de raccordement qui, lorsque le dispositif de raccordement et les soubassements arrière et avant sont assemblés sur un véhicule, sont destinées à être positionnées en contact respectivement avec le soubassement avant et le soubassement arrière, et qui présentent respectivement une forme complémentaire à la forme d'au moins une partie du contour périphérique du soubassement avant et une forme complémentaire d'au moins une partie du contour périphérique du soubassement arrière, la première zone de raccordement présentant un profil sensiblement complémentaire à un tunnel de transmission de soubassement avant.

Il est entendu au sens de la présente invention que les termes « avant » et « arrière » se référent au véhicule.

Un soubassement avant, au sens de la présente invention comprend deux panneaux de plancher avant, un tunnel de transmission et éventuellement des longerons, et constitue la moitié avant d'un plancher de véhicule.

Un soubassement arrière, au sens de la présente invention, comprend au moins une planche à talon et un panneau de plancher arrière et constitue la moitié arrière d'un plancher de véhicule.

Ainsi, le dispositif de raccordement selon l'invention permet de diminuer la diversité des soubassements avant et arrière qu'un constructeur automobile doit produire. En effet, le dispositif de raccordement selon l'invention permet de s'affranchir de la forme spécifique de chaque soubassement, arrière ou avant, qui implique qu'à un soubassement avant corresponde une série déterminée de soubassements arrière puisque le dispositif de raccordement, au niveau des première et seconde zones de raccordement, peut être adapté à la fois aux soubassements avant et arrière. Ainsi, deux soubassements avant et arrière qui ne présentent pas une complémentarité de forme peuvent être néanmoins assemblés grâce au dispositif de raccordement selon l'invention.

Dans un mode de réalisation de l'invention, la première zone de raccordement présente un profil sensiblement complémentaire à un tunnel de transmission de soubassement avant.

Dans un mode de réalisation de l'invention, la première zone de raccordement présente un profil sensiblement en U, selon une coupe transversale.

Dans un mode de réalisation de l'invention, le dispositif de raccordement est conçu de manière à ce que le contact entre la première zone de raccordement et le soubassement avant puisse se faire par chevauchement au moins partiellement dudit soubassement avant avec ledit dispositif de raccordement. Ainsi, l'assemblage du soubassement avant et du dispositif de raccordement selon l'invention, par chevauchement, assure une meilleure étanchéité au bruit de l'ensemble.

Dans un mode de réalisation de l'invention, la seconde zone de raccordement présente un profil sensiblement complémentaire à une partie d'une planche à talon d'un soubassement arrière. De même, cette complémentarité de forme assure une bonne étanchéité de l'ensemble, notamment une étanchéité au bruit.

Dans un mode de réalisation de l'invention, le dispositif de raccordement comprend en outre au moins une platine de fixation en vue d'assurer sa fixation dans au moins un soubassement avant et/ou arrière. Ladite platine de fixation permet de faciliter l'assemblage et la fixation dudit dispositif de raccordement sur le soubassement avant et/ou arrière.

L'invention sera mieux comprise à l'aide de la description détaillée qui est exposée ci-dessous en regard des dessins annexés dans lesquels :
La Figure 1 est une vue schématique en perspective d'un dispositif de raccordement selon la présente invention ;
la Figure 2 est une vue schématique en perspective d'un plancher de véhicule selon l'invention.

Dans la description qui suit les termes « longitudinal » et « transversal » se référent au référentiel véhicule où le terme « longitudinal » caractérise une direction sensiblement orientée suivant la longueur du véhicule et où « transversal » caractérise une direction sensiblement orientée suivant sa largeur.

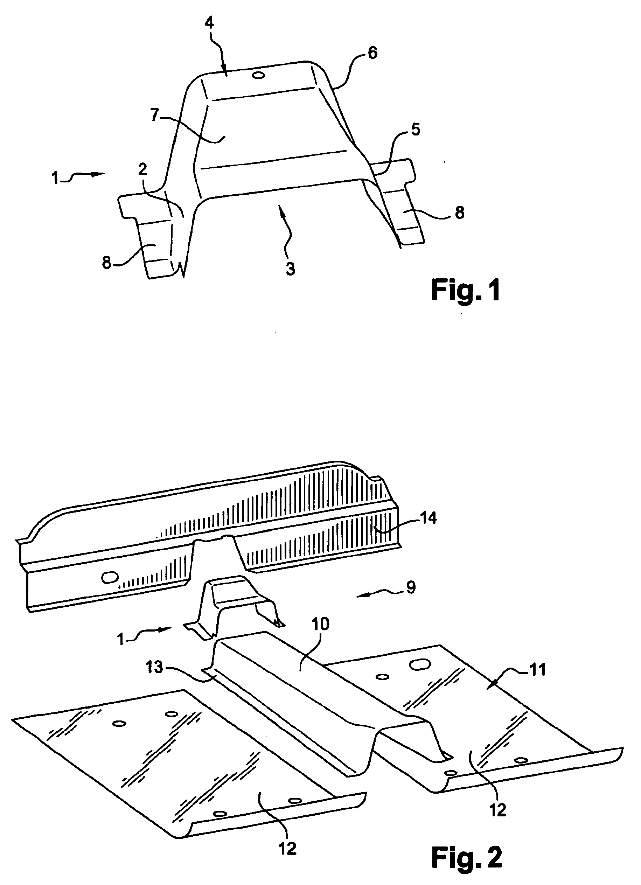

Le dispositif de raccordement 1, représenté sur la Figure 1, comprend un carter de carrosserie 2 présentant une première zone de raccordement 3 et une seconde zone de raccordement 4. Un tel dispositif de raccordement 1 se présente, par exemple, sous la forme de deux profilés sensiblement en U, un premier profilé 5 et un second profilé 6, chaque profilé (5, 6) ayant une profondeur différente. Les premier et second profilés (5, 6) sont alors reliés entre eux par une section en pente 7 de manière à ce que les axes des deux profilés (5, 6) soient confondus. Dans ce cas, par exemple, la première zone de raccordement 3 est constituée d'au moins une partie du premier profilé 5 et la seconde zone de raccordement 4 est constituée d'au moins une partie du second profilé 6.

Le carter de carrosserie 2 peut également comporter des platines de fixation 8 destinées à permettre la fixation dudit dispositif de raccordement 1.

Le plancher selon l'invention, représenté à la Figure 2, comprend un kit de carrosserie 9 lui-même constitué d'un tunnel de transmission 10 et d'un dispositif de raccordement 1.

Afin d'assembler un plancher d'un véhicule, un premier soubassement avant 11 est, dans un premier temps, assemblé à partir du tunnel de transmission 10 contenu dans le kit de carrosserie 9 et de deux panneaux de plancher 12.

Avantageusement, le tunnel de transmission 10 présente une forme commune utilisée pour plusieurs types de soubassements avant d'un même constructeur d'automobile. A cette fin, le tunnel de transmission 10 peut présenter plusieurs orifices 13 de fixation pour s'adapter aux panneaux de plancher 12. Ces orifices 13 peuvent être effectués par poinçonnage au moment de l'emboutissage du tunnel de transmission 10 ou bien ultérieurement, avant l'assemblage du soubassement avant 11. La mise en oeuvre de l'invention permet donc de réduire la diversité des éléments de carrosserie nécessaires à un même constructeur d'automobiles et donc de réduire les coûts de production dudit constructeur.

Dans un deuxième temps, le dispositif 1 selon l'invention est positionné au contact du soubassement avant 11, de manière à ce que la première zone de raccordement 3 vienne en contact avec au moins une partie du tunnel de transmission 10. Sur la Figure 2, la surface intérieure d'une partie du profilé 5 est destinée à venir en contact avec la surface extérieure d'une partie du tunnel de transmission 10.

Lorsque le dispositif de raccordement 1 est assemblé sur un véhicule, le dispositif de raccordement 1 chevauche ainsi le tunnel de transmission 10 et s'appui, par exemple, sur une planche à talon 14 d'un soubassement arrière (non complètement représenté sur la Figure 2). Ainsi, lorsque le plancher est assemblé, la première zone de raccordement 3, constituée par au moins une partie du premier profilé 5 vient en contact du soubassement avant 11, au niveau de son contour arrière, et chevauche le tunnel de transmission 10. Pour cela, la première zone de raccordement 3 présente un profil complémentaire du tunnel de transmission 10.

La seconde zone de raccordement 4, constituée par au moins une partie du second profilé 6, vient en contact avec la planche à talon 14 du soubassement arrière. Afin d'assurer un assemblage correct, la seconde zone de raccordement 4 est complémentaire d'une partie du profil de la planche à talon 14.

Ainsi, le dispositif de raccordement 1 selon l'invention décrit ci-dessus permet d'assembler un soubassement avant 11 avec un soubassement arrière, quelles que soient leurs formes respectives, à condition de choisir la forme du dispositif de raccordement 1 adéquate. L'invention permet de réduire la diversité des soubassements avant qu'un constructeur automobile doit produire et donc permettent de réduire les coûts inhérents.

## Revendications

1. Plancher pour véhicule automobile comprenant un soubassement avant (11), un soubassement arrière et un dispositif de raccordement (1) du soubassement arrière avec le soubassement avant (11), le dispositif de raccordement comprenant un carter de carrosserie (2) comportant une première zone de raccordement (3) et une seconde zone de raccordement (4) qui, lorsque le dispositif de raccordement (1) et les soubassements arrière et avant (11) sont assemblés sur un véhicule, sont destinées à être positionnées en contact respectivement avec le soubassement avant (11) et le soubassement arrière, et qui présentent respectivement une forme complémentaire à la forme d'au moins une partie du contour périphérique du soubassement avant (11) et une forme complémentaire d'au moins une partie du contour périphérique du soubassement arrière, **caractérisé en ce que** la première zone de raccordement (3) présente un profil sensiblement complémentaire à un tunnel de transmission (10) de soubassement avant (11).

2. Plancher pour véhicule automobile selon la revendication 1, dans lequel la première zone de raccordement (3) présente un profil sensiblement en U, selon une coupe transversale.

3. Plancher pour véhicule automobile selon l'une des revendications 1 ou 2, conçu de manière à ce que le contact entre la première zone de raccordement (3) et le soubassement avant (11) puisse se faire par chevauchement au moins partiellement dudit soubassement avant (11) avec ledit dispositif de raccordement (1).

4. Plancher pour véhicule automobile selon l'une des revendications 1 à 3, dans lequel la seconde zone de raccordement (4) présente un profil sensiblement complémentaire à une partie d'une planche à talon (14) du soubassement arrière.

5. Plancher pour véhicule automobile selon l'une des revendications 1 à 4, comprenant en outre au moins une platine de fixation (8) en vue d'assurer sa fixation dans le soubassement avant (11) et/ou arrière.

## Patentansprüche

1. Fußboden für Kraftfahrzeug, der eine vordere Unterseite (11), eine hintere Unterseite sowie eine Verbindungsvorrichtung (1) der hinteren Unterseite an der vorderen Unterseite (11) umfasst, wobei die Verbindungsvorrichtung eine Karosserieverkleidung (2) umfasst, die eine erste Anschlusszone (3) und eine zweite Anschlusszone (4) umfasst, die, wenn die Verbindungsvorrichtung (1) und die hintere und vordere Unterseite (11) auf einem Fahrzeug zusammengebaut werden, dazu bestimmt sind, in jeweilige Berührung mit der vorderen Unterseite (11) und der hinteren Unterseite positioniert zu sein, und die jeweils eine Form aufweisen, die zu der Form mindestens eines Teils der umfänglichen Kontur der vorderen Unterseite (11) komplementär ist, und eine Form, die zu mindestens einem Teil der umfänglichen Kontur der hinteren Unterseite komplementär ist, **dadurch gekennzeichnet, dass** die erste Anschlusszone (3) ein Profil aufweist, das im Wesentlichen zu einem Getriebetunnel (10) der vorderen Unterseite (11) komplementär ist.

2. Fußboden für Kraftfahrzeug nach Anspruch 1, wobei die erste Anschlusszone (3) ein Profil mit im Wesentlichen U-Form entlang eines Querschnitts aufweist.

3. Fußboden für Kraftfahrzeug nach einem der Ansprüche 1 oder 2, der derart konzipiert ist, dass der Kontakt zwischen der ersten Anschlusszone (3) und der vorderen Unterseite (11) durch mindestens teilweises Überlagern der vorderen Unterseite (11) mit der Verbindungsvorrichtung (1) erfolgen kann.

4. Fußboden für Kraftfahrzeug nach einem der Ansprüche 1 bis 3, wobei die zweite Anschlusszone (4) ein Profil aufweist, das im Wesentlichen zu einem Teil einer Absatzplatte (14) der hinteren Unterseite komplementär ist.

5. Fußboden für Kraftfahrzeug nach einem der Ansprüche 1 bis 4, der außerdem mindestens eine Befestigungsplatte (8) zum Sicherstellen seiner Befestigung in der vorderen Unterseite (11) und/oder der hinteren Unterseite umfasst.

## Claims

1. A floor for a motor vehicle including a front underbody (11), a rear underbody and a connection device (1) of the rear underbody with the front underbody (11), the connection device including a body enclosure (2) comprising a first connection area (3) and a second connection area (4) which, when the connection device (1) and the rear and front (11) underbodies are assembled on a vehicle, are intended to be positioned in contact respectively with the front underbody (11) and the rear underbody, and which present respectively a complementary shape to the shape of at least a portion of the peripheral contour of the front underbody (11) and a complementary shape to at least a portion of the peripheral contour of the rear underbody, **characterized in that** the first connection area (3) has a profile substantially complementary to a transmission tunnel (10) of front underbody (11).

2. The floor for a motor vehicle according to claim 1, in which the first connection area (3) has a substantially U-shaped profile, along a cross-section.

3. The floor for a motor vehicle according to one of claims 1 or 2, designed such that the contact between the first connection area (3) and the front underbody (11) can be made by overlapping at least partially of said front underbody (11) with said connection device (1).

4. The floor for a motor vehicle according to one of claims 1 to 3, in which the second connection zone (4) has a profile substantially complementary to a portion of a heel board (14) of the rear underbody.

5. The floor for a motor vehicle according to one of claims 1 to 4, further including at least one attaching plate (8) with the aim of ensuring its attachment in the front (11) and/or rear underbody.
